Europäisches Patentamt

European Patent Office

Office européen des brevets

(19)

(11) Numéro de publication: **0 145 528**
**B1**

(12) **FASCICULE DE BREVET EUROPEEN**

(45) Date de publication du fascicule du brevet: **18.05.88**

(51) Int. Cl.⁴: **G 21 C 19/06**

(21) Numéro de dépôt: **84402084.2**

(22) Date de dépôt: **17.10.84**

(54) Râtelier de stockage d'éléments combustibles de réacteurs nucléaires.

(30) Priorité: **19.10.83 FR 8316847**

(43) Date de publication de la demande:
**19.06.85 Bulletin 85/25**

(45) Mention de la délivrance du brevet:
**18.05.88 Bulletin 88/20**

(84) Etats contractants désignés:
**BE CH DE FR GB IT LI SE**

(56) Documents cités:
**EP-A-0 071 364**
**FR-A-2 462 767**
**US-A-4 024 406**
**US-A-4 042 828**
**US-A-4 124 445**
**US-A-4 143 276**
**US-A-4 187 433**

(73) Titulaire: **Etablissements LEMER & CIE
Rue de la Fonderie Zone Industrielle
Nantes/Carquefou
F-44477 Carquefou Cedex (FR)**

(72) Inventeur: **Helary, Jean-Louis
12, Avenue du Commandant Noury
F-44100 Nantes (FR)**
Inventeur: **Grenon, Pierre Eugène
Route de la Päquelais
F-44240 Treillieres (FR)**

(74) Mandataire: **Mongrédien, André et al
c/o BREVATOME 25, rue de Ponthieu
F-75008 Paris (FR)**

Courier Press, Leamington Spa, England.

## Description

La présente invention à pour objet une structure montable et démontable sur site de râtelier de stockage d'éléments combustibles de réacteurs nucléaires, ratelier du genre de ceux qui comprennent une juxtaposition d'alvéoles parallélépipédiques verticaux ouverts à leurs extrémités.

Ces râteliers de stockage servent à entreposer le maximum d'éléments combustibles de réacteurs nucléaires dans un minimum de place. Habituellement, ces éléments prennent place séparément dans des alvéoles métalliques disposés dans un châssis de soutien. Le stockage et la proximité relative des éléments combusibles ne doivent pas permettre à ces éléments d'atteindre leur niveau de criticité: c'est pour cette raison qu'un espacement minimal entre chaque alvéole est imposé.

Cet espacement dépend du type d'éléments combustibles entreposés, de la protection offerte par les alvéoles et du milieu ambiant de stockage (à sec ou en piscine). Le châssis doit assurer cet espacement minimal et être suffisamment indéformable et rigide pour résister aux contraintes dues par exemple à des secousses sismiques.

Les structures de râtelier de stockage d'éléments combustibles de réacteurs nucléaires connues jusqu'à ce jour sont constituées généralement d'un treillis de poutres métalliques soudées aux alvéoles. Elles comportent par exemple deux réseaux de poutres croisés formant deux grilles dans lesquelles s'enfilent les alvéoles. Deux enceintes métalliques maintiennent en place les alvéoles situés à la périphérie. Tous les éléments constitutifs de ces structures sont pour la plupart soudés. Ces types de réalisation sont décrits dans les documents FR—A—2 462 767, EP—A— 0 071 364 et US—A—4 187 433.

Ces structures posent les problèmes suivants: si elles sont montées en atelier, leur transport sur site est difficile en raison de leur encombrement et de leur poids. Si elles sont montées sur site, le temps de soudage est long et coûteux et de plus leur géométrie finale entaléatoire à cause des contraintes thermiques. La qualité des soudures est difficilement vérifiable sur site. Il est également difficile de redémonter la structure sans l'endommager sérieusement.

L'invention a pour objet un râtelier de stockage d'éléments conbustibles de réacteurs nucléaires, notamment en piscine, comprenant:

des alvéoles parallélépipédiques verticaux juxtaposés, ouverts à leurs extrémités, formés chacun d'un tube à quatre faces latérales, parallèles entre elles deux à deux, définissant deux couples de faces parallèles;

une plaque de fond horizontale;

au moins deux réseaux maillés de barres horizontales, chaque réseau comprenant deux séries de barres parallèles entrecroisées pour définir des mailles recevant chacune l'un des alvéoles, un premier de ces réseaux étant fixé sur la plaque de fond et un deuxième de ces réseaux étant situé au niveau d'une partie supérieure des alvéoles; et

des moyens pour retenir les alvéoles situés sur la périphérie de la structure de râtelier contre les barres correspondantes,

cette structure étant caractérisée en ce qu'elle comprend de plus au moins deux barrettes horizontales fixées sur deux faces non parallèles de chaque alvéole, au niveau de chacun des réseaux, une première de ces barrettes étant placée au-dessous d'une barre d'une première desdites séries, dite série inférieure, et en contact avec cette barre, et une deuxième de ces barrettes étant placée endessous d'une barre de la deuxième série, dite série supérieure, et en contact avec cette barre, des moyens de fixation démontables reliant chacune des séries de barres d'un même réseau et les séries de barres du premier réseau à la plaque de fond, de façon à enserrer les barrettes entre les barres correspondantes et à immobiliser les alvéoles dans lesdites mailles.

Avantageusement, les moyens permettant de retenir les alvéoles situés sur la périphérie de la structure comprent des pièces de maintien fixées sur les deux extrémités des barres de chaque réseau.

D'autres avantages et caractéristiques de l'invention ressortiront mieux de la description qui suit, donnée à titre explicatif mais nullement limitatif, en référence aux figures annexées, sur lesquelles:

la figure 1 représente, en perspective, une vue d'ensemble de la structure selon l'invention;

la figure 2 représente, en perspective, l'enserrage et le blocage d'un alvéole par les deux réseaux maillés de barres horizontales, selon un mode préféré de réalisation de l'invention,

la figure 3 représente, en perspective, selon une vue d'ensemble de la structure partiellement montée et couchée sur le côté, une phase du procédé de montage suivant l'invention, et

la figure 4 représente, en perspective, le blocage des alvéoles par un réseau maillé sur la plaque de fond, lors d'une phase du procédé de montage suivant l'invention.

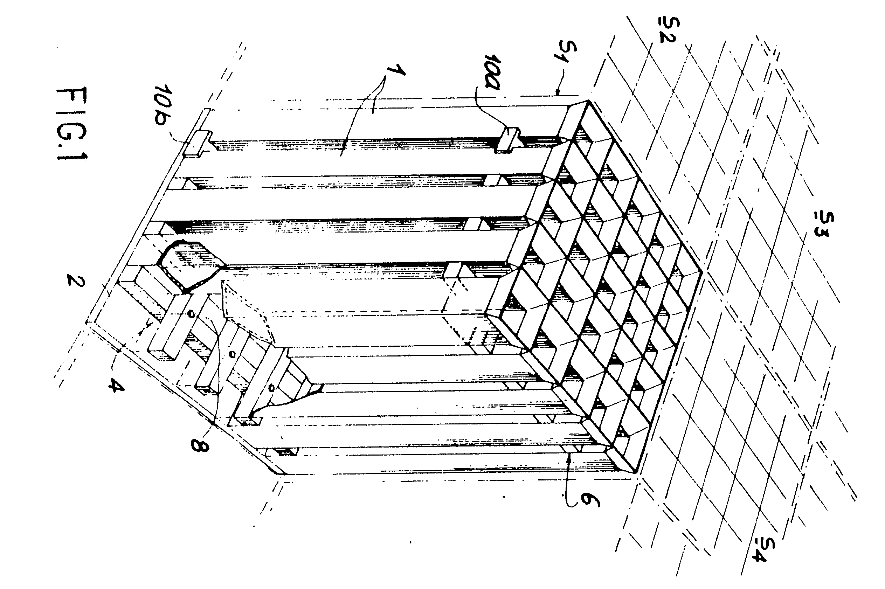

La figure 1 représente un ensemble de stockage groupant plusieurs structures $S_1$, $S_2$, $S_3$, $S_4$... de râtelier de stockage selon l'invention. Lors d'un stockage en piscine, par exemple, on monte plusieurs structures selon l'invention dont la manutention est facile, puis on les range en les juxtaposant afin de constituer ledit ensemble de stockage.

La figure 1 montre plus precisément une vue éclatée d'une structure $S_1$ montable et démontable de râtelier de stockage d'éléments combustibles de réacteurs nucléaires selon l'invention.

Elle comprend tout d'abord une juxtaposition d'alvéoles 1 métalliques parallèlépipédiques verticaux ouverts à leurs extrémités. La structure selon l'invention a pour principal objet de ranger ces alvéoles 1 et de les maintenir rigidement de façon à ce que les liaisons entre les alvéoles et les réseaux soient des encastrements. Pour réaliser est objectif, elle comprend une plaque de fond 2 horizontale sur laquelle est fixé un réseau inférieur 4 de barres parallèles horizontales. Au moins un autre réseau 6 de barres parallèles horizontales est assemblé à la partie supérieure des alvéoles. Les alvéoles viennent donc se loger dans les mailles 8 définies par les réseaux 4, 6, l'espacement entre les alvéoles étant assuré par les dimensions des barres.

Des pièces de maintien sont fixées à l'extrémité de chaque barre parallèle horizontale, permettant aux alvéoles situés sur la périphérie de la structure d'être appliqués contre les barres correspondantes, à titre indicatif, deux d'entre elles 10a et 10b sont représentées sur la figure 1.

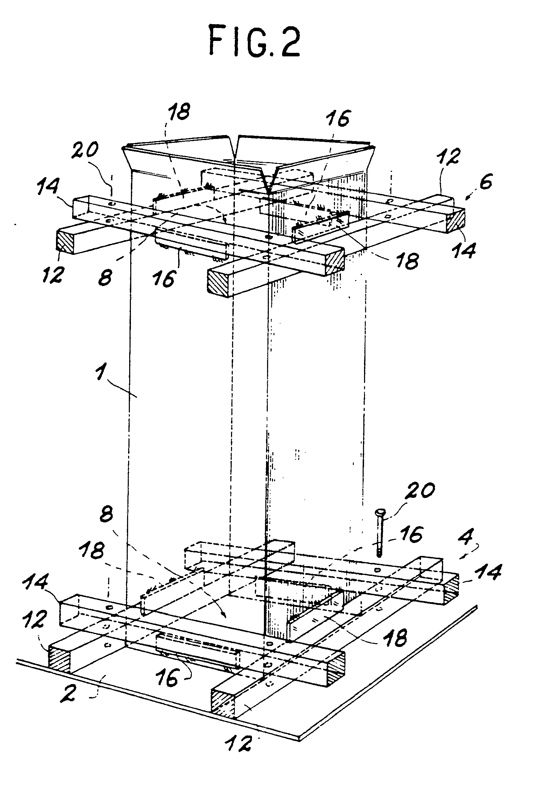

Les moyens utilisés pour fixer les alvéoles sur le réseau inférieur 4 et la plaque de fond 2 et pour fixer les autres réseaux 6 sur les alvéoles sont représentés sur la figure 2, selon un mode préféré de réalisation de l'invention. Sur cette figure, un alvéole 1 est répresenté. Il est formé d'un tube à quatre faces latérales, parallèles entre elles deux à deux et définissant deux couples de faces parallèles. Son extrémité supérieure s'évase de telle façon que l'élément combustible puisse se loger facilement dans l'alvéole.

Deux réseaux maillés 4, 6 sont représentés: un réseau 4 dit inférieur et un réseau 6 dit supérieur. Ils se composant chacun de deux séries 12, 14 de barres parallèles horizontales, l'une appelée "série inférieure" 12, l'autre, "série supérieure" 14. Les barres parallèles de la série inférieure 18 sont orthogonales aux barres de la série supérieure 14, définissant ainsi des mailles 8 rectangulaires dans lesquelles se logent les alvéoles.

Sur la figure 2, au niveau de chaque réseau 4, 6, les barres parallèles de la série supérieure 14 reposent sur un premier couple 16 de barrettes fixé sur un premier couple de faces parallèles de l'alvéole. De la même façon, un deuxième couple 18 de barretles fixé sur un deuxième couple de faces parallèles de l'alvéole vient prendre appui sur les barres parallèles de la série inférieure 12. Les deux couples 16, 18 de barrettes sont fixés de telle façon qu'il existe un certain jeu entre les barres de la série supérieure 14 et les barres de la série inférieure 12.

Des vis d'assemblage 20 traversent les barres d'un même réseau au niveau de chacune de leurs intersections. Pour dans raisons de simplicité, il n'est représenté qu'une seule vis 20 sur la figure 2. Les efforts de liaison exercés par ces vis 20 s'appliquent de la façon suivante: les barres parallèles de la série supérieure 14 sont en appui sur le premier couple 16 de barrettes qui lui-même est solidaire du second couple 18 de barrettes par l'intermédiaire de l'alvéole, ledit second couple 18 de barrettes s'appuyant sur les barres parallèles de la série inférieure 12.

Au niveau du réseau inférieur 4, les vis d'assemblage 20 traversent également la plaque de fond 2 sur laquelle repose la série inférieure 12 de barres parallèles; on réalise ainsi le blocage de la translation verticale de l'alvéole dont la liaison avec la plaque de fond 2 est alors un encastrement.

Au niveau des autres réseaux, ici le réseau supérieur 6, on enserre les couples 16, 18 de barrettes entre les séries 12, 14 de barres parallèles correspondantes, bloquant ainsi la translation verticale du réseau supérieur 6 par rapport à l'alvéole et réalisant un encastrement entre ceux-ci.

Avantageusement, en rigidifie la structure en fixant sur chaque extrémité des barres parallèles une pièce de maintien 10a, 10b permettant de retenir les alvéoles situés à la périphérie de la structure et de les bloquer sur les barres correspondantes (figure 1).

Ou obtient de la sorte une structure de râtelier de stockage montable et démontable, rigide, apte à résister aux secousses sismiques et permettant de placer précisément les alvéoles selon l'espacement imposé.

Bien entendu, la description ci-dessus n'a été donnée qu'à titre d'exemple, toutes modifications dans les formes de réalisation pouvant être envisagées sans modifier le principe fondamental de l'invention. Par exemple, le nombre d'alvéoles et de réseaux représentés n'est absolument pas limitatif; il dépend des impératifs de stockage. On peut également envisager d'autres moyens pour maintenir les alvéoles sur la périphérie de la structure, par exemple une ceinture métallique enserrant ces alvéoles de manière démontable. Chaque barrette horizontale peut être d'un seul bloc ou en plusieurs morceaux. De la même mainière, les barres parallèles de la série inférieure 12 du réseau inférieur 4 fixées sur la plaque de fond 2 peuvent être fractionnées en plusieurs morceaux. On peut aussi envisager des barres de formes diverses: pleines, creuses, en U,... Sans sortir du cadre de l'invention on peut envisager des structures ou certains alvéoles ne possèdent pas de barrettes, et s'ils en possèdent qu'elles soient disposées sur au moins un réseau.

La structure selon l'invention présente les avantages suivants:

Dans le cas habituel d'alvéoles soudés sur la plaque de fond, la liaison réalisée n'est pas un encastrement alors qu'une des principales particularités de la structure selon l'invention est de réaliser un encastrement des alvéoles sur la plaque de fond par l'intermédiaire du réseau inférieur de barres parallèles, des couples de barrettes et des moyens de fixation. De la même façon, on réalise un encastrement entre les alvéoles et le réseau supérieur de barres parallèles par l'intermédiaire des couples de barrettes et des moyens de fixation correspondants. La structure selon l'invention permet donc de faire participer de façon efficace les alvéoles à la rigidité du râtelier de stockage.

Le montage peut être effectué sur site, ce qui autorise un transport en pièces détachées et donc un gain de place, de poids et de facilité de transport.

On évite les halls de montage spécialisés.

Les opérations de décapage-passivation sont facilitées puisqu'elles peuvent s'effectuer sur des composants de faible volume (barres et plaques) et non sur une structure préalablement montée.

Il existe une plus grande souplesse dans l'assurance qualité. En effet, puisque l'on n'effectue pas d'opérations de soudure, il n'est pas nécessaire de radiographier les soudures, comme c'est le cas habituellement et, de plus, les propriétés physiques et chimiques des matériaux employés ne sont pas altérées par la surchauffe due au soudage.

L'absence d'opérations de soudage supprime les contraintes thermiques et empêche le cumul dimensionnel des erreurs de montage et des dilatations. Les barres selon l'invention sont préalablement percées de façon précise en atelier, ce qui permet de respecter les cotes dimensionnelles désirées du ratelier l'espacement minimal entre chaque alvéole et la dimension globale du ratelier.

Il est possible de démonter et d'intervenir sur un ou plusieurs alvéoles endommagés sans détériorer la structure.

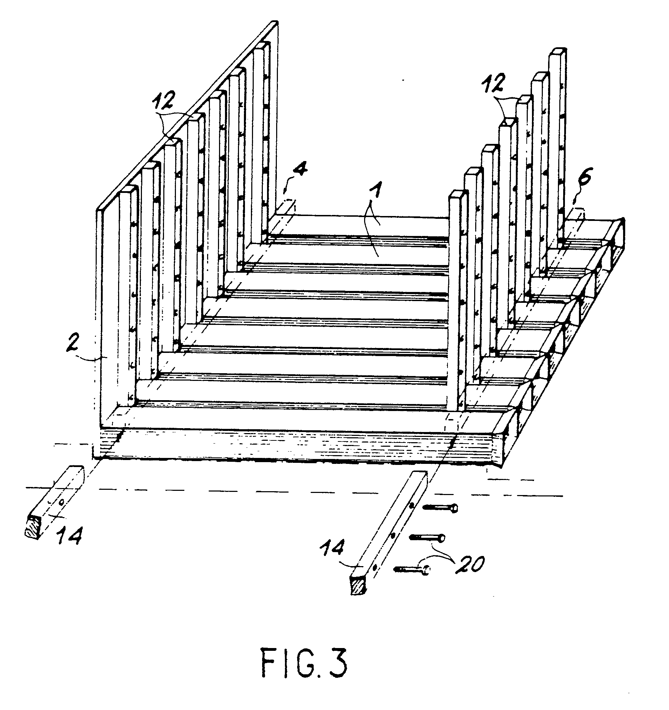

Une phase du montage du râtelier de stockage selon l'invention est représentée sur la figure 3, le procédé de montage consistant à:

installer des gabarits de montage (non représentés) servant à mettre en position la plaque de fond 2 verticalement et chaque série inférieure 12 de barres parallèles dressées alors verticalement;

positionner la plaque de fond 2 et ces séries inférieures 12 de barres parallèles;

mettre en place une première rangée d'alvéoles 1 horizontalement.

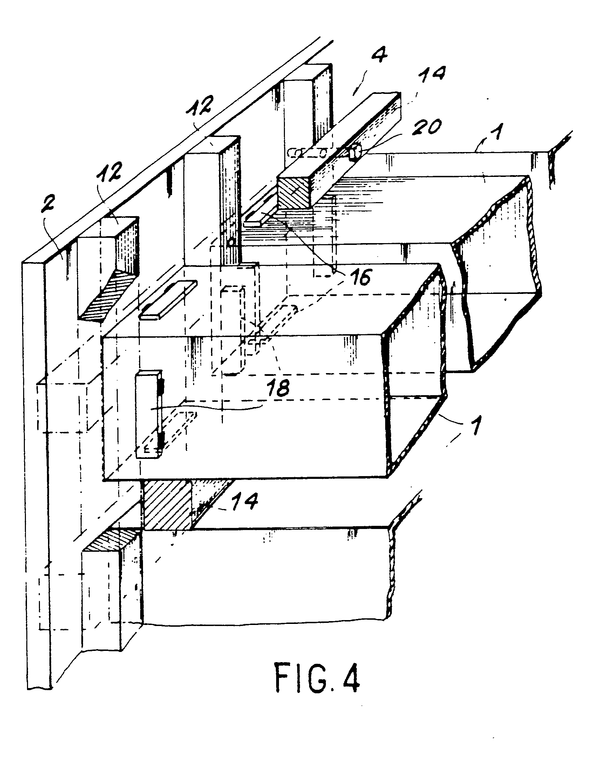

Sur la figure 4, on remarque que le deuxième couple 18 de barrettes de chaque alvéole 1 vient s'appliquer sur les barres parallèles correspondantes des séries inférieures 12;

placer au niveau de chaque réseau 4, 6 la barre correspondante de la série supérieure 14. Elle s'applique sur le premier couple 16 de barrettes de chaque alvéole 1 (figure 4);

fixer au moyen des vis 20 les barres parallèles des séries supérieures 14 sur les barres parallèles des séries inférieures 12 en enserrant entre elles les couples 16, 18 de barrettes. On fixe de plus les barres parallèles de la série inférieure 12 du réseau inférieur 4 sur la plaque de fond 2;

répéter les opérations de mise en place d'une rangés d'alvéoles et de fixation des barres des séries supérieures correspondantes jusqu'à l'obtention du nombre de rangées désiré;

fixer les pièces de maintien 10a, 10b sur chaque extrémité des barres de la structure pour ainsi réaliser une structure rigide indéformable (figure 1).

On peut ensuite redresser la structure verticalement et la placer sur le site à sa place prévue dans l'ensemble de stockage. Le démontage de la structure selon l'invention s'effectue en exécutant les opérations de montage dans l'ordre exactement inverse.

Par rapport aux réalisations habituelles, ce procédé de montage a l'avantage d'être rapide, de respecter les caractéristiques dimensionnelles imposées du râtelier et de permettre donc la réalisation d'un ratelier de stockage à un coût inférieur à celui demandé habituellement par ce type de réalisation.

On a décrit ci-dessus un procédé de montage où les alvéoles sont montées horizontalement à titre illustratif mais non limitatif. D'autres procédés peuvent être envisagés; par exemple on peut monter la structure verticalement en réalisant les mêmes opérations que celles décrites précédemment. On modifie alors les gabarits de montage pour maintenir le réseau supérieur de barres parallèles à l'horizontal.

## Revendications

1. Râtelier de stockage d'éléments combustibles de réacteurs nulcéaires, notamment en piscine, comprenant:

des alvéoles (1) parallélépipédiques verticaux juxtaposés, ouverts à leurs extrémités, formés chacun d'un tube à quatre faces latérales, parallèles entre elles deux à deux, définissant deux couples de faces parallèles;

une plaque de fond (2) horizontale;

au moins deux réseaux (4, 6) maillés de barres horizontales, chaque réseau comprenant deux séries de barres parallèles (12, 14) entrecroisées pour définir des mailles (8) recevant chacune l'un des alvéoles (1), un premier (4) de ces réseaux étant fixé sur la plaque de fond (2) et un deuxième (6) de ces réseaux étant situé au niveau d'une partie supérieure des alvéoles; et

des moyens (10a, 10b) pour retenir les alvéoles (1) situés sur la périphérie de la structure de ratelier contre les barres correspondantes,

cette structure étant caractérisée en ce qu'elle comprend de plus au moins deux barrettes horizontales (16, 18) fixées sur deux faces non parallèles de chaque alvéole (1), au niveau de chacun des réseaux (4, 6), une première (18) de ces barrettes étant placée au-dessus d'une barre (12) d'une première desdites séries, dite série inférieure, et en contact avec cette barre, et une deuxième (16) de ces barrettes étant placée en-dessous d'une barre (14) de la deuxième série, dit série supérieure, et en contact avec cette barre, des moyens de fixation démontables (20) reliant chacune des séries de barres (12, 14) d'un même réseau et les séries de barres du premier réseau à la plaque de fond, de façon à enserrer les barrettes (16, 18) entre les barres correspondantes (12, 14) et à immobiliser les alvéoles (1) dans lesdites mailles (8).

2. Râtelier de stockage selon la revendication 1, caractérisé en ce que les moyens pour retenir les alvéoles situés sur la périphérie de la structure comportent des pièces de maintien (10a, 10b) fixées sur les deux extrémités des barres de chaque réseau.

3. Procédé de montage du râtelier de stockage selon l'une quelconque des revendications 1 et 2, caractérisé en ce qu'il consiste à:

positionner la série inférieure (12) de barres parallèles du premier réseau (4) sur la plaque de fond (2) et effectuer la mise en position et l'alignement de chaque série inférieure (12) de barres parallèles des autres réseaux (6),

mettre en place une première rangée d'alvéoles (1) entre chacune des barres précédemment positionnées, de façon à appliquer les premières barrettes (18) sur les barres (12) des séries inférieures,

fixer au niveau de chaque réseau (4, 6) une barre (14) de la série supérieure, de façon à appliquer les deuxièmes barrettes (16) sur cette barre (14) de la série supérieure et à enserrer les barrettes (16, 18) entre les barres (12) des séries inférieures et les barres (14) des séries supérieures,

répéter les opérations de mise en place d'une rangée d'alvéoles et de fixation des barres des séries supérieures correspondantes jusqu'à l'obtention du nombre de rangées désiré, et

fixer les pièces de maintien (10a, 10b) sur chaque extrémité des barres parallèles.

## Patentansprüche

1. Lagergestell für Brennelemente von Kernreaktoren, insbesondere in einem Becken mit:

parallelepipetförmigen, vertikalen, nebeneinander angeordneten Zellen (1), die an ihren einen Enden offen sind und von denen jede von einem Rohr mit vier Seitenflächen gebildet ist, die paarweise parallel sind und zwei Paare von parallelen Seiten festlegen;

einer horizontalen Bodenplatte (2);

wenigstens zwei Maschengittern (4, 6) aus horizontalen Stangen, wobei jedes Gitter zwei Reihen von parallelen, überkreuzten Stangen (12, 14) aufweist, um Maschen (8) zu begrenzen, von denen jede eine der Zellen (1) aufnimmt, wobei ein erstes (4) dieser Gitter auf der Bodenplatte (2) befestigt ist und sich ein zweites (6) dieser Gitter auf der Höhe eines oberen Abschnitts der Zellen befindet; und

Mittel (10a, 10b), um die sich am Umfang der Gestellstruktur befindenden Zellen (1) gegen die entsprechenden Stangen zu halten,

wobei diese Struktur dadurch gekennzeichnet ist, daß sie ferner wenigstens zwei horizontale Stangen (16, 18) aufweist, die an zwei nichtparallelen Seiten einer jeder Zelle (1) auf der Höhe eines jeden Gitters (4, 6) befestigt sind, obei eine erste (18) dieser Stangen oberhalb einer Stange (12) einer ersten der genannten Reihen, untere Reihe genannt, und in Berührung mit dieser Stange angeordnet ist, und eine zweite (16) dieser Stangen unterhalb einer Stange (14) der zweiten Reihe, obere Reihe genannt, und in Berührung mit dieser Stange angeordnet ist, sowie lösbare Befestigungsmittel (20), die jede der Reihen von Stangen (12, 14) desselben Gitters und die Reihen von Stangen des ersten Gitters mit der Bodenplatte derart verbinden, daß die Stangen (16, 18) zwischen den entsprechenden Stangen (12, 14) eingeklemmt werden und die Zellen (1) in den genannten Maschen (8) festgesetzt werden.

2. Lagergestell nach Anspruch 1, dadurch gekennzeichnet, daß die Mittel zum Zurückhalten der sich auf dem Umfang der Struktur befindenden Zellen Halteteile (10a, 10b) umfassen, die an den zwei Enden der Stangen von jedem Gitter befestigt sind.

3. Verfahren zum Zusammenbauen des Lagergestells nach Anspruch 1 oder 2, dadurch gekennzeichnet, daß es darin besteht:

die untere Reihe (12) von parallelen Stangen des ersten Gitters (4) auf der Bodenplatte (2) zu positionieren und das Inlagebringen und Ausrichten jeder unteren Reihe (12) von parallelen Stangen der anderen Gitter (6) durchzuführen,

eine erste Reihe von Zellen (1) zwischen jede der vorhergehend positionierten Stangen anzuordnen, so daß die ersten Stangen (18) auf die Stangen (12) der unteren Reihen angewandt werden,

auf der Höhe von jedem Gitter (4, 6) eine Stange (14) der oberen Reihe zu befestigen, so daß die zweiten Stangen (16) auf diese Stangen (14) der oberen Reihe angewandt werden und die Stangen (16, 18) zwischen den Stangen (12) der unteren Reihen und den Stangen (14) der oberen Reihen eingeklemmt werden,

das Vorgehen des Inlagebringens einer Reihe von Zellen und der Befestigung der Stangen der entsprechenden oberen Reihen zu wiederholen, bis die erwünschte Anzahl von Reihen erhalten wird, und

die Halteteile (10a, 10b) an jedem Ende der parallelen Stangen zu befestigen.

## Claims

1. Storage rack system for fuel elements of nuclear reactors, particularly in a pool comprising:

juxtaposed vertical parallelepipedic racks (1), open at their ends and each formed by a tube with four lateral faces, which are parallel to one another in pairs and defining two pairs of parallel faces;

a horizontal base plate (2);

at least two meshed networks (4, 6) of horizontal bars, each network having two lines of parallel bars (12, 4) intersecting one another to define meshes (8) in each case receiving one of the racks (1), a first (4) of said networks being fixed to the base plate (2) and a second (6) of said networks being positioned level with an upper part of the racks; and

means (10a, 10b) for making it possible to hold the racks (1) located on the periphery of the rack system structure against the corresponding bars;

said structure being characterized in that it also comprises at least two horizontal strips (16, 18) fixed to two non-parallel faces of each rack (1) level with each of the networks (4, 6), a first (18) of said strips being placed above a bar (12) of a first of said lines, called the lower line and in contact with said bar, and a second (16) of said strips being placed below a bar (14) of the second line, called the upper line and in contact with said bar, dismantlable fixing means (20) connecting each of the lines of bars (12, 14) of the same network and the lines of bars of the first network to the base plate, so as to grip the strips (16, 18) between the corresponding bars (12, 14) and to fix the racks (1) in said meshes (8).

2. Storage rack system according to claim 1 characterized in that the means for securing the racks located on the periphery of the structure have maintaining parts (10a, 10b) fixed to the two ends of the bars of each network.

3. Process for the assembly of a storage rack system according to either of the claims 1 and 2, characterized in that it comprises positioning the lower line (12) of parallel bars of the first network (4) on base plate (2) and effecting the positioning and alignment of each lower line (12) of parallel bars of the other network (6), placing a first line of racks (1) between each of the previously positioned bars so as to apply the first strips (18) to the bars (12) of the lower lines, fixing, level with each network (4, 6), a bar (14) of the upper line, so as to apply the second strips (16) to said bar (14) of the upper line and securing strips (16, 18) between bars (12) of the lower lines and bars (14) of the upper lines, repeating the operations of putting into place a row of racks and the fixing of bars of the corresponding upper lines until the desired number of rows is obtained and fixing the maintaining parts (10a, 10b) on each end of the parallel bars.

FIG.1

# FIG.2

FIG.3

FIG. 4